# EUROPEAN PATENT SPECIFICATION

(11) **EP 1 650 447 B1**
(45) Date of publication and mention of the grant of the patent: **15.08.2007**
(21) Application number: 05020649.9
(22) Date of filing: 22.09.2005
(51) Int. Cl.: F16B 37/04

(54) **Screw grommet**
Halteöse für Schrauben
Manchon pour vis

(30) Priority: 20.10.2004 US 620445 P; 30.06.2005 US 172037
(43) Date of publication of application: 26.04.2006
(73) Proprietor: ILLINOIS TOOL WORKS INC., Glenview Illinois 60026-1215 (US)
(72) Inventor: Moerke, Benjamin H., Chippewa Falls, Wisconsin 54729 (US)
(74) Representative: Zech, Stefan Markus

(56) References cited:
- EP-A- 0 441 691
- EP-A- 1 380 758
- DE-A1- 19 829 542
- DE-U1- 9 001 042
- US-A- 3 869 958
- US-A1- 2004 057 812

## Description

### FIELD OF THE INVENTION

The present invention relates generally to grommets, and more particularly to improved strength screw grommets, according to the preamble of claim 1.

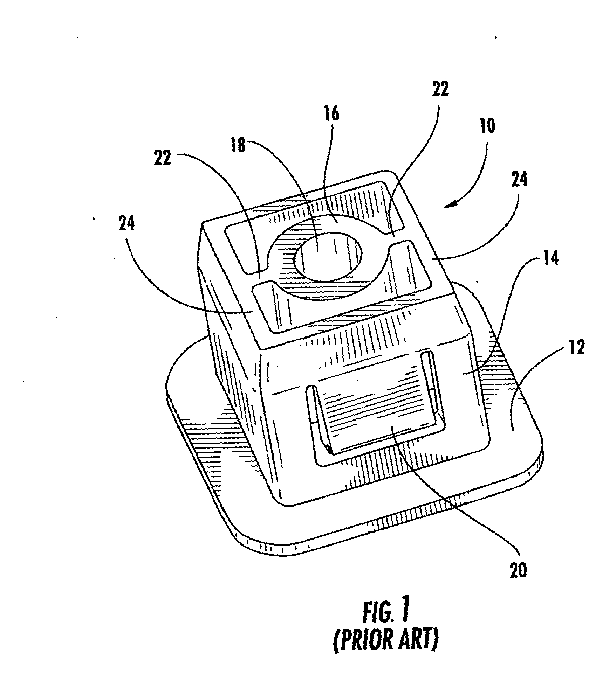

Such a grommet is shown in Fig. 1 of the drawings.

### BACKGROUND OF THE INVENTION

Grommets are known and are used in a wide range of applications. Grommets can be metal, plastic or rubber ring-type devices that are inserted into a pre-formed or pre-drilled hole made through another material or substrate. The grommets may be used to reinforce the hole, to shield a rope or cord from any sharp edges of the hole, or to mount an item or other structure to the hole through the use of a screw or fastener that is inserted into the grommet. If used in the latter application, that is, as a device for mounting an item or other structure to a pre-formed hole, the grommet is first inserted into the pre-formed hole and is held in position by flexible prongs or retention legs formed from the grommet. Once anchored to the hole, the screw can then be threaded into a hole formed in the grommet for mounting an item, structure or additional substrates to the hole. In some applications, the insertion of the screw into the hole in the grommet causes the prongs or retention legs to expand, thereby further securing the grommet to the hole.

Grommets are typically rated based on performance data that includes push-in effort, screw retention, and strip-out torque. While this data is somewhat dependent on the specific size of the screw and the application, it is desirable to improve the grommets' strength capabilities, including the grommets' push-in, screw retention and strip-out torque capabilities. The present invention is directed at providing such improvements over existing grommet designs.

### SUMMARY OF THE INVENTION

The present invention is directed to a one-piece screw grommet that provides improvements in the key areas of screw grommet performance. That is, the grommet of the invention provides lower push-in effort, higher screw retention capabilities, and improved strip torque over the known grommet designs. The exemplary grommet of the invention includes generally a grommet body and a grommet head. The grommet body includes four retention legs, with two retention legs positioned on one body wall and two retention legs positioned on an opposite body wall. The grommet further includes a screw boss defining a hole in which may be mounted a screw or fastener. The screw boss is secured to the body walls of the grommet body through the use of four support ribs that are spaced around the screw boss and extend between the screw boss and the body walls.

Other features and advantages of the invention will become apparent to those skilled in the art upon review of the following detailed description, claims and drawings in which like numerals are used to designate like features.

### BRIEF DESCRIPTION OF THE DRAWINGS

Figure 1 is an isometric view of a prior art screw grommet.

Figure 2 is an isometric view of an exemplary grommet of the present invention.

Figure 3 is an isometric bottom view of the grommet of Figure 2.

Figure 4 is a top view of the grommet of Figure 2.

Figure 5 is a side view of the grommet of Figure 2.

Figure 6 is another side view of the grommet of Figure 2.

Before the embodiments of the invention are explained in detail, it is to be understood that the invention is not limited in its application to the details of construction and the arrangement of the components set forth in the following description or illustrated in the drawings. Also, it is to be understood that the phraseology and terminology used herein are for the purpose of description and should not be regarded as limiting. The use of "including" and "comprising" and variations thereof is meant to encompass the items listed thereafter and equivalents thereof as well as additional items and equivalents thereof.

### DETAILED DESCRIPTION OF THE EMBODIMENTS

Referring to Figure 1, there is illustrated a prior art screw grommet 10 defining a head 12 and a body 14. A screw boss 16 which defines a hole 18 extends through the head 12 and body 14 to mount a screw or other fastener. The head 12 and body 14 are generally square-shaped. The body 14 further defines opposing retention legs 20 that permit the grommet to be snap-fit into a pre-formed mating hole and held in position after it has been mounted. Opposing support ribs 22 are used to secure the screw boss 16 relative to walls 24 of the body 14.

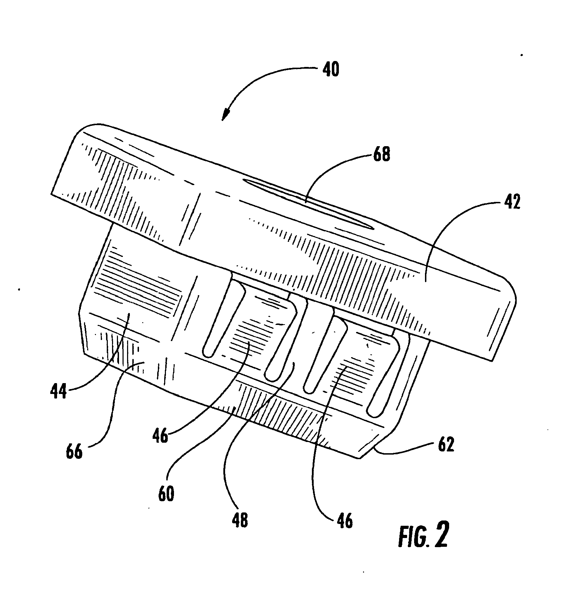

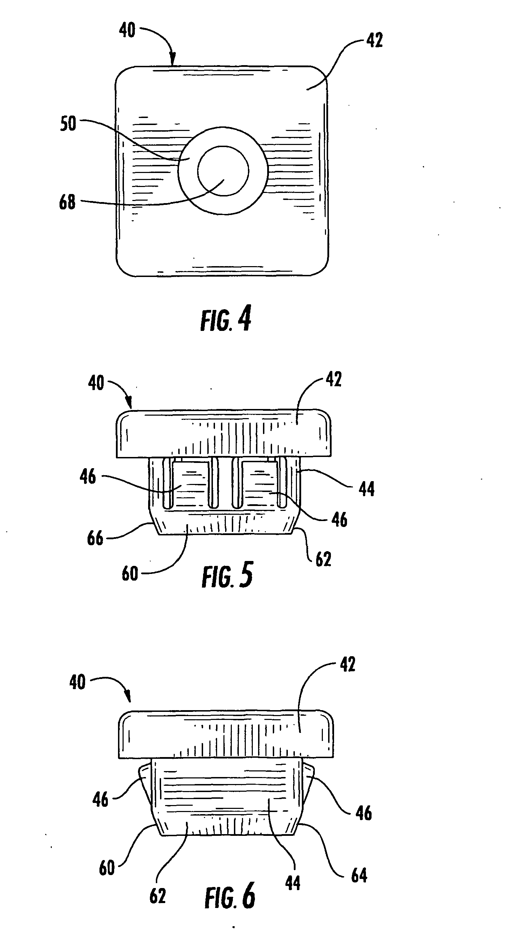

Referring to Figures 2-6, there is depicted an exemplary grommet 40 of the present invention. In the exemplary embodiment, the grommet 40 may be made as a one-piece device and made of a plastic material, such as nylon 6/6. The grommet 40 may define a grommet head 42 and a grommet body 44. In the illustrated embodiment, the head and body are generally square-shaped, though other shapes and configurations of the head and body are possible with the invention. The head 42 serves to hold the grommet 40 to the pre-formed or pre-drilled hole, not shown, to prevent the grommet from being pushed through the hole.

The body 44 includes retention legs 46, support ribs 48, and a screw boss 50. The retention legs 46 may be four retention legs positioned on the body 44. In the illustrated embodiment, two retention legs 46 are positioned on body wall 52, while two retention legs 46 are positioned on opposing body wall 54. As can be seen in the Figures, each retention leg 46 is positioned near a corner of the body - a corner formed by the body walls. The advantages of this placement are described below. Each retention leg 46 is configured as a living hinge in that the leg 46 is connected at one end to the body wall and is flexible at the legs opposite end. The flexible opposite end permits the leg 46 to flex inward toward the body wall as the grommet is mounted to the pre-formed hole, not shown, and will flex or snap back to its original position once the leg 46 passes through the pre-formed hole. Once in this position, the leg 46 will contact the back side of the surface wall or substrate surrounding the pre-formed hole, preventing the grommet from being pulled out of the hole. With the grommet 40 of the invention, the retention legs 46 in combination with the head 42 provide a secure attachment of the grommet 40 to the pre-formed hole in the wall or substrate.

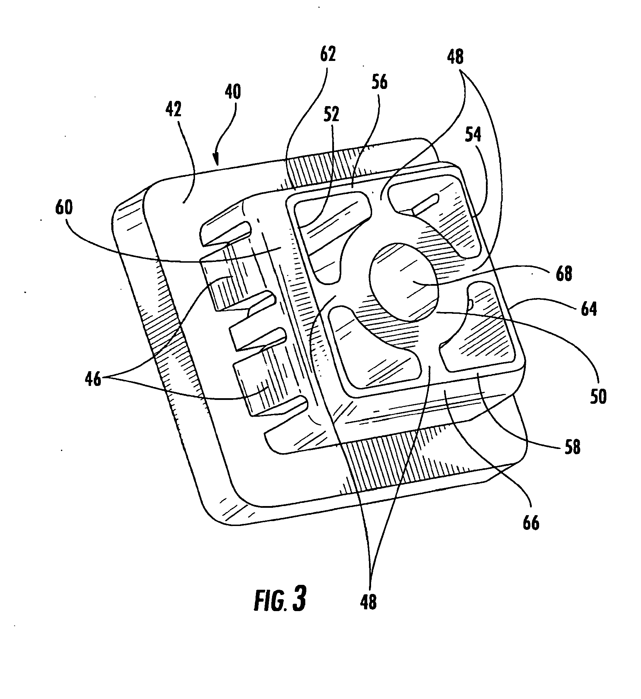

As shown in Figure 3, four support ribs 48 extend between the screw boss 50 and walls 52, 54, 56, and 58 of the body 44. The support ribs 48 are spaced equidistant around the screw boss 50 and provide improved structural integrity for the screw boss 50 relative to the body 44. The support ribs 48 extend substantially the length of the screw boss 50. The walls 52, 54, 56, and 58 of the body 44 may define tapered surfaces 60, 62, 64, and 66 that assist in the insertion of the grommet 40 into the pre-formed hole.

The screw boss 50 defines a hole 68 extending through the head 42 and body 44 of the grommet 40. The hole 68 is sized and shaped to receive a mounting screw or fastener, such as a self-tapping screw or the like, not shown. With many applications, the mounting screw may be driven through additional substrates and into the hole 68 to attach the additional substrates to the wall on which the grommet is mounted to clamp them together tightly.

The grommet 40 of the invention overcomes the problems encountered with the grommet 10 design when subject to high strip torques. Specifically, a known problem with the prior art grommet 10 is that as high strip torques are reached, the screw boss 16 can begin to twist under the load. In an effort to overcome this problem, the wall thicknesses of the ribs 22 were increased. However, increasing the wall thickness of the two ribs 22 can cause additional problems because such an effort can result in non-uniform wall thicknesses, which encourage non-uniform shrink and additional molded-in stresses. The grommet 40 overcomes these problems by providing four support ribs 48 spaced equidistant around the screw boss 50, as depicted in Figure 3, the four support ribs providing added strength to the screw boss 50. With the use of the four support ribs 48, the uniformity of the wall thicknesses is maintained and higher values of strip torque are achieved.

Moreover, by using four independent retention legs 46, rather than the known two retention legs 20, screw retention within the grommet 40 is enhanced and the installation of the grommet 40 is improved. More specifically, with respect to the enhanced screw retention, the four retention legs 46 are configured and positioned near the corners of the body 44, as illustrated in the Figures. With this configuration, the retention legs 46 distribute the screw loading to areas of the mating hole that are better supported, that is, closer to the corners of the mating square-shaped pre-formed hole. In contrast, the prior art retention legs 20 place the loading in the weakest part of the square-shaped hole, namely, at the center of the square-shaped hole, that is, at or near the midpoint between the corners of the hole. Additionally, with the use of the four retention legs 46, the installation into the mating hole will be improved because the illustrated configuration results in a grommet that is easier to install than the two-legged design of the prior art grommet 10.

Also, in many of the grommet applications, the grommet is installed in a punched hole in sheet metal. The punching process can result in burrs on the back side of the panel and these burrs often occur in localized areas. Under these circumstances, if the prior art grommet 10 is used, a burr anywhere along one of the retention legs can prevent engagement of that side of the grommet and thus preventing the secure mounting of the grommet to the panel. With the grommet 40 having the four retention legs 46, a local burr could prevent one retention leg from engaging the back side of the panel but the other retention leg on the same side of the grommet can still properly engage the panel due to its independence from the other leg that is being hampered by the burr. Consequently, the grommet 40 can be properly secured to the panel despite the occurrence of a localized burr.

Variations and modifications of the foregoing are within the scope of the present invention. The embodiments described herein explain the best modes known for practicing the invention and will enable others skilled in the art to utilize the invention. The claims are to be construed to include alternative embodiments to the extent permitted by the prior art.

## Claims

1. A grommet (40) comprising:
a body (44) defining body walls (52, 54, 56, 58) and retention legs (46),
a head (42) formed with the body (44), and
a screw boss (50) joined to the body walls (52, 54, 56, 58) through the use of support ribs (48), the support ribs (48) extending between the body walls (52, 54, 56, 58) and the screw boss (50),
**characterized in that**
the body (44) defines four retention legs (46) and the screw boss (50) is joined to the body walls (52, 54, 56, 58) through the use of four support ribs (48).

2. The grommet of claim 1 wherein the screw boss (50) defines a hole (68) extending through the body (44) and the head (42).

3. The grommet of claim 1 or 2 wherein the four support ribs (48) are spaced equidistant around the screw boss (50).

4. The grommet of at least one of the preceding claims wherein the body walls (52, 54, 56, 58) define tapered ends (60, 62, 64, 66).

5. The grommet of at least one of the preceding claims wherein two of the four retention legs (46) are positioned on one body wall (52, 54, 56, 58) and the other two retention legs (46) are positioned on another body wall (52, 54, 56, 58).

6. The grommet of at least one of the preceding claims 1 to 4 wherein two of the four retention legs (46) are positioned on a first body wall (52, 54, 56, 58) and the other two retention legs (46) are positioned on a second and opposite body wall (52, 54, 56, 58).

7. The grommet of claim 6 wherein the body walls (52, 54, 56, 58) define corners between the body walls, and wherein the four retention legs (46) are positioned near the corners.

8. The grommet of at least one of the preceding claims wherein the support ribs (48) have a uniform wall thickness.

9. The grommet of at least one of the preceding claims wherein the body (44) defines four body walls (52, 54, 56, 58) and a first pair of retention legs (46) on one body wall, and a second pair of retention legs (46) on an opposite body wall.

10. The grommet of claim 9 wherein each of the first pair and second pair of retention legs (46) is positioned near a corner formed by the body walls (52, 54, 56, 58).

11. The grommet of at least one of the preceding claims wherein the four support ribs (48) extend substantially the length of the screw boss (50).

## Patentansprüche

1. Halteöse (40), die Folgendes umfasst:
einen Körper (44), der Körperwände (52, 54, 56, 58) und Halteschenkel (46) definiert,
einen mit dem Körper (44) ausgebildeten Kopf (42) und
einen Schraubdom (50), der durch Verwendung von Stützrippen (48) mit den Körperwänden (52, 54, 56, 58) verbunden ist, wobei sich die Stützrippen (48) zwischen den Körperwänden (52, 54, 56, 58) und dem Schraubdom (50) erstrecken,
**dadurch gekennzeichnet, dass**
der Körper (44) vier Halteschenkel (46) definiert und der Schraubdom (50) durch Verwendung von vier Stützrippen (48) mit den Körperwänden (52, 54, 56, 58) verbunden ist.

2. Halteöse nach Anspruch 1, wobei der Schraubdom (50) ein Loch (68) definiert, das sich durch den Körper (44) und den Kopf (42) erstreckt.

3. Halteöse nach Anspruch 1 oder 2, wobei die vier Stützrippen (48) in einem gleichen Abstand um den Schraubdom (50) herum angeordnet sind.

4. Halteöse nach mindestens einem der vorhergehenden Ansprüche, wobei die Körperwände (52, 54, 56, 58) sich verjüngende Enden (60, 62, 64, 66) definieren.

5. Halteöse nach mindestens einem der vorhergehenden Ansprüche, wobei zwei der vier Halteschenkel (46) an einer Körperwand (52, 54, 56, 58) und die anderen beiden Halteschenkel (46) an einer anderen Körperwand (52, 54, 56, 58) angeordnet sind.

6. Halteöse nach mindestens einem der Ansprüche 1 bis 4, wobei zwei der vier Halteschenkel (46) an einer ersten Körperwand (52, 54, 56, 58) und die anderen beiden Halteschenkel (46) an einer zweiten und gegenüberliegenden Körperwand (52, 54, 56, 58) angeordnet sind.

7. Halteöse nach Anspruch 6, wobei die Körperwände (52, 54, 56, 58) Ecken zwischen den Körperwänden definieren und wobei die vier Halteschenkel (46) in der Nähe der Ecken positioniert sind.

8. Halteöse nach mindestens einem der vorhergehenden Ansprüche, wobei die Stützrippen (48) eine gleichförmige Wanddicke aufweisen.

9. Halteöse nach mindestens einem der vorhergehenden Ansprüche, wobei der Körper (44) vier Körperwände (52, 54, 56, 58) und ein erstes Paar Halteschenkel (46) an einer Körperwand und ein zweites Paar Halteschenkel (46) an einer gegenüberliegenden Körperwand definiert.

10. Halteöse nach Anspruch 9, wobei sowohl das erste Paar als auch das zweite Paar Halteschenkel (46) in der Nähe einer durch die Körperwände (52, 54, 56, 58) definierten Ecke angeordnet ist.

11. Halteöse nach mindestens einem der vorhergehenden Ansprüche, wobei sich die vier Stützrippen (48) im Wesentlichen über die Länge des Schraubdoms (50) erstrecken.

## Revendications

1. Manchon (40) comprenant:
un corps (44) définissant des parois du corps (52, 54, 56, 58) et des jambes de retenue (46),
une tête (42) formée avec le corps (44), et
un bossage pour vis (50) joint aux parois du corps (52, 54, 56, 58) grâce à l'utilisation de nervures de support (48), ces nervures de support (48) s'étendant entre les parois du corps (52, 54, 56, 58) et le bossage pour vis (50),
**caractérisé en ce que**
le corps (44) définit quatre jambes de retenue (46) et le bossage pour vis (50) est joint aux parois du corps (52, 54, 56, 58) grâce à l'utilisation de quatre nervures de support (48).

2. Manchon selon la revendication 1, le bossage pour vis (50) définissant un trou (68) s'étendant à travers le corps (44) et la tête (42).

3. Manchon selon la revendication 1 ou 2, les quatre nervures de support (48) étant écartées de manière équidistante autour du bossage pour vis (50).

4. Manchon selon au moins une des revendications précédentes, les parois du corps (52, 54, 56, 58) définissant des extrémités en pente (60, 62, 64, 66).

5. Manchon selon au moins une des revendications précédentes, deux des quatre jambes de retenue (46) étant positionnées sur une paroi du corps (52, 54, 56, 58) et les deux autres jambes de retenue (46) étant positionnées sur une autre paroi du corps (52, 54, 56, 58) .

6. Manchon selon au moins une des revendications précédentes 1 à 4, deux des quatre jambes de retenue (46) étant positionnées sur une première paroi du corps (52, 54, 56, 58) et les deux autres jambes de retenue (46) étant positionnées sur une deuxième paroi du corps (52, 54, 56, 58) opposée.

7. Manchon de la revendication 6, les parois du corps (52, 54, 56, 58) définissant des coins entre les parois du corps, et les quatre jambes de retenue (46) étant positionnées près de ces coins.

8. Manchon selon au moins une des revendications précédentes, les nervures de support (48) ayant une épaisseur de paroi uniforme.

9. Manchon selon au moins une des revendications précédentes, le corps (44) définissant quatre parois du corps (52, 54, 56, 58) et une première paire de jambes de retenue (46) sur une paroi du corps, et une deuxième paire de jambes de retenue (46) sur une paroi du corps opposée.

10. Manchon selon la revendication 9, chacune de la première paire et de la deuxième paire des jambes de retenue (46) étant positionnée près d'un coin formé par les parois du corps (52, 54, 56, 58).

11. Manchon selon au moins une des revendications précédentes, les quatre nervures de support (48) s'étendant essentiellement sur la longueur du bossage pour vis (50).
